# EUROPÄISCHE PATENTSCHRIFT

(11) **EP 3 315 042 B1**
(45) Veröffentlichungstag und Bekanntmachung des Hinweises auf die Patenterteilung: **01.12.2021**
(21) Anmeldenummer: 17198697.9
(22) Anmeldetag: 26.10.2017
(51) Int. Cl.: A44B 18/00, B29C 43/22, C23F 1/02, B07B 1/46

(54) **VERFAHREN ZUR HERSTELLUNG EINES SIEBFÖRMIGEN ENTFORMUNGSWERKZEUGS**
METHOD FOR PRODUCING A SIEVE-LIKE DEMOULDING TOOL
PROCÉDÉ DE FABRICATION D'UN OUTIL DE DÉMOULAGE EN FORME DE TAMIS

(30) Priorität: 26.10.2016 DE 102016120409
(43) Veröffentlichungstag der Anmeldung: 02.05.2018
(73) Patentinhaber: Lohmann-koester GmbH & Co. KG, 96146 Altendorf (DE)
(72) Erfinder:
(74) Vertreter: Molnia, David

(56) Entgegenhaltungen:
- WO-A1-2007/134685
- CN-A- 103 203 968
- DE-A1- 19 646 318
- DE-A1-102004 016 614
- FR-A1- 2 639 871
- US-A1- 2004 119 192
- US-A1- 2012 199 551

## Beschreibung

### Technisches Gebiet

Die vorliegende Erfindung betrifft ein Verfahren zur Herstellung eines siebförmigen Entformungswerkzeugs, die Schritte umfassend: Bereitstellen eines Nickelrohrs, Abdecken der Oberfläche des Nickelrohrs mit einem Schutzlack, Erzeugen einer Vielzahl von Löchern in dem Schutzlack, zur Bildung einer Ätzmaske auf dem Nickelrohr, Sprühätzen des Nickelrohrs samt Ätzmaske, zur Erzeugung einer Vielzahl von Kavitäten in dem Nickelrohr an den Stellen, an welchen sich die Löcher in der Ätzmaske befinden.

### Stand der Technik

Zur Herstellung von Haken für mechanische Verschlüsse, wie zum Beispiel Klett- oder Haken-Schlaufenverschlüsse, werden Vorformlinge in Form von auf einem Träger angeordneten Stilen hergestellt. Diese Vorformlinge werden in der Regel mittels einer Formwalze und einer Anpresswalze erzeugt. Dabei kann die Formwalze eine Gießwalze umfassen, auf welcher ein Sieb zum Formen der Stiele angeordnet ist. Zur Herstellung der Stiele wird dann ein thermoplastisches Material in einen Spalt zwischen der Formwalze und der Anpresswalze extrudiert. Die Schmelze erkaltet teilweise in den Formholräumen der Formwalze, welche durch das Sieb gebildet werden. Nach dem Entformen liegen Vorformlinge in Form von Stielen vor, welche von einer Matte beziehungsweise einem Träger emporragen.

Entscheidend für die Formgebung der Vorformlinge ist das verwendete Sieb. Die Eigenschaften der Vorformlinge können bereits durch das Herstellverfahren des Siebs beeinflusst werden. In einem allgemein bekannten Verfahren zur Siebherstellung wird zunächst ein dünnwandiges Nickelrohr bereitgestellt. In einem nächsten Schritt wird das Nickelrohr mit einem Schutzlack überzogen. Darauf folgend wird der Schutzlack an den Bereichen, an welchen die Sieblöcher erzeugt werden sollen, mittels eines Lasers mit Löchern versehen. Der gelöcherte Schutzlack bildet eine Ätzmaske. Anschließend wird das dünnwandige Nickelrohr gemeinsam mit der Ätzmaske einer Ätzbehandlung unterzogen. Ein Ätzmittel ätzt Löcher in das Nickelrohr an den Stellen, an denen die Ätzmaske Löcher aufweist. Schließlich liegt ein dünnwandiges Nickelsieb vor.

Da dieses Sieb jedoch noch zu dünn für die Herstellung von Vorformlingen ist, muss es einem weiteren Vernicklungsprozess unterzogen werden. Dabei werden in einem Galvanobad weitere Nickelschichten auf das dünne Nickelsieb aufgetragen. Mit der Zunahme der Wandstärke nimmt auch die Länge der Löcher des Siebs zu. Der Materialauftrag durch Vernicklung kann so lange durchgeführt werden, bis die gewünschte Länge der Durchgangslöcher erreicht ist.

Da der Materialauftrag und insbesondere die Fortbildung der Löcher nicht unmittelbar zu kontrollieren sind, können die Löcher untereinander Unregelmäßigkeiten aufweisen. Davon ist insbesondere die Form der inneren Oberfläche der Löcher betroffen. Unregelmäßig geformte Löcher haben unregelmäßige Vorformlinge zur Folge.

Darüber hinaus bilden sich an den Randbereichen der Löcher Radien. Diese Radien sind charakteristisch für den Materialauftrag mittels Galvanobad. Die Radien haben zur Folge, dass Durchgangslöcher in Form von rotationssymmetrischen Hyperboloiden entstehen. Exakte Geometrien, wie zum Beispiel Kanten an den Enden des Durchgangslochs, oder ein über die Länge des Durchgangslochs gesehener konstanter Durchmesser sind somit nicht möglich.

DE 196 46 318 A1 zeigt ein rationelles Verfahren zur Herstellung eines Haftverschlußteils aus thermoplastischem Kunststoff gemäß dem Oberbegriff des Anspruchs 1.

US 2004/0119192 A1 zeigt ein Verfahren zum Herstellen eines Haftverschlußteils.

### Darstellung der Erfindung

Ausgehend von dem bekannten Stand der Technik ist es eine Aufgabe der vorliegenden Erfindung, ein verbessertes Verfahren zur Herstellung eines siebförmigen Entformungswerkzeugs anzugeben. Diese Aufgabe wird mittels eines Verfahrens mit den Merkmalen des Anspruchs 1 gelöst. Vorteilhafte Ausgestaltungen ergeben sich aus den Unteransprüchen.

Entsprechend wird ein Verfahren zur Herstellung eines siebförmigen Entformungswerkzeugs angegeben, welches die folgenden Schritte umfasst: Bereitstellen eines Nickelrohrs, Abdecken der Oberfläche des Nickelrohrs mit einem Schutzlack, Erzeugen einer Vielzahl von Löchern in dem Schutzlack, zur Bildung einer Ätzmaske auf dem Nickelrohr, Sprühätzen des Nickelrohrs samt Ätzmaske, zur Erzeugung einer Vielzahl von Kavitäten in dem Nickelrohr an den Stellen, an welchen sich die Löcher in der Ätzmaske befinden. Erfindungsgemäß folgt dem Sprühätzschritt mindestens ein zweiter Sprühätzschritt, um Kavitäten in Form von Durchgangslöchern zu erzeugen, und die inneren Oberflächen der Kavitäten werden in einem weiteren Schritt mittels eines Lasers behandelt, um aufgrund der aufeinanderfolgenden Sprühätzschritte in den Kavitäten entstandene Verengungen zu entfernen.

Mit dem vorstehend beschriebenen Verfahren ist es möglich, ein siebförmiges Entformungswerkzeug ohne die Durchführung eines Auftragverfahrens herzustellen. Die Schritte einer Vernickelung, beispielsweise mittels eines Galvanobads, mittels welchem Nickel Schicht für Schicht aufgetragen wird, um ein Nickelrohr mit einer gewünschten Wandstärke zu erhalten, ist nicht erforderlich. Vielmehr wird das Nickelrohr bereits in der gewünschten Endwandstärke bereitgestellt. D.h., die Wandstärke des Nickelrohrs ist festgelegt, bevor die Kavitäten in dem Nickelrohr erzeugt werden. Dadurch lassen sich Formhohlräume in Form von Durchgangslöchern mit konstanter Länge in dem Nickelrohr erzeugen.

Da das Nickelrohr eingangs bereits seine Endwandstärke aufweist, werden mindestens zwei Sprühätzschritte benötigt, um die Durchgangslöcher in dem Nickelrohr zu erzeugen. Dabei wird mittels jedem Sprühätzschritt sukzessive ein Abschnitt eines Durchgangslochs erzeugt. Bei dem zweiten und jedem weiteren Sprühätzschritt muss das Sprühätzmittel durch den zuvor erzeugten Abschnitt oder die zuvor erzeugten Abschnitte der Kavität hindurchgeführt werden, um die Kavität zu erweitern. Dabei entstehen Übergänge zwischen den einzelnen Abschnitten der Kavität in Form von Verengungen. Dies hat zur Folge, dass der zweite und alle weiteren mittels eines Sprühätzschritts erzeugten Abschnitte der Kavität einen geringeren Durchmesser aufweisen, als der mittels des vorhergehenden Sprühätzschritts erzeugte Abschnitt der Kavität. Durch die mindestens zwei nacheinander ausgeführten Sprühätzschritte entstehen somit stufenförmige Durchgangslöcher in dem Nickelrohr.

Des Weiteren kann auch die mittels eines Sprühätzschritts erreichbare Abtrag- oder Ätztiefe gegenüber dem vorhergehenden Sprühätzschritt geringer ausfallen, so dass die Länge der mittels der einzelnen Sprühätzschritte erzeugbaren Abschnitte der Kavität sukzessive abnimmt.

Die nachgeschaltete Laserbehandlung ermöglicht es, die unregelmäßige Oberfläche des mittels der mindestens zwei Sprühätzschritte erzeugten Durchgangslochs zu begradigen. Dadurch ist es möglich, ein Durchgangsloch mit einer glatten inneren Oberfläche bereitzustellen.

Ein weiterer Vorteil des vorstehend beschriebenen Verfahrens liegt darin, dass Radien an den Enden des Durchgangslochs vermieden bzw. reduziert werden können. Mittels des sukzessiven Abtragverfahrens in Form von mindestens zwei Sprühätzschritten und der nachgeschalteten Lasernachbehandlung können an den Enden der Durchgangslöcher exakte Geometrien, wie zum Beispiel Kanten, erzeugt werden.

In einer bevorzugten Ausgestaltung wird mittels mindestens dem ersten Sprühätzschritt eine Kavität in Form eines Sacklochs erzeugt. Mittels des letzten Sprühätzschritts erhält die Kavität die Form eines Durchgangslochs. Entsprechend wird mittels des ersten Sprühätzschritts eine Kavität erzeugt, welche von der äußeren Oberfläche des Nickelrohrs radial nach innen ragt, wobei die Tiefe des Abschnitts kleiner als die Wandstärke des Nickelrohrs ist. Frühestens mittels des zweiten Sprühätzschritts wird die Kavität dahingehend erweitert, dass sie von der äußeren Umfangsoberfläche bis hin zur inneren Umfangsoberfläche des Nickelrohrs ragt.

In einer bevorzugten Ausführungsform verengt sich die Kavität des Durchgangslochs stufenweise, wobei der Durchmesser des mittels des zweiten Sprühätzschritts erzeugbaren Abschnitts der Kavität gegenüber dem vorhergehenden Abschnitt kleiner ist.

In einer Weiterbildung erfolgt die Laserbehandlung zum Entfernen der Verengungen mittels eines Gravurlasers. Mit einem Gravurlaser ist es möglich, eine glatte Oberfläche auf der Innenseite des Durchgangslochs zu erzeugen. Die mittels der Sprühätzschritte erzeugten Abschnitte des Durchgangslochs mit verschiedenen Durchmessern können dadurch zu einem Abschnitt mit einem einzigen Durchmesser verschmolzen werden. Der Gravurlaser kann von der Außenseite des Nickelrohrs in die Durchgangslöcher eingebracht werden. Die sukzessive Reduktion des Durchmessers der mittels der einzelnen Sprühätzschritte erzeugten Abschnitte der Kavität stellt überstehende Lochränder bereit, deren Oberflächen hin zur Außenseite des Nickelrohrs gerichtet sind. Der Gravurlaser kann diese überstehenden Lochränder erfassen und dadurch den Durchmesser eines Abschnitts der Kavität an den Durchmesser eines angrenzenden Abschnitts der Kavität angleichen.

Alternativ können mittels des Gravurlasers auch lediglich die Übergänge von einem Abschnitt der Kavität zu einem angrenzenden Abschnitt der Kavität geglättet werden.

Insgesamt weist der Schritt der Lasernachbehandlung einen vergleichsweise geringen Materialabtrag auf. So wird beim Anpassen der Durchmesser der Abschnitte der Kavität oder beim Glätten der Übergänge zwischen den einzelnen Abschnitten der Kavität nur eine geringe Menge des Nickelrohrs abgetragen. Dadurch fällt die Lasernachbehandlung weniger zeit- und energieintensiv aus als eine Erzeugung eines Durchgangslochs, welche vollständig auf einem Materialabtrag mittels Laserbehandlung basiert.

In einer weiter bevorzugten Ausführungsform werden mittels der Laserbehandlung zum Entfernen der Verengungen durchgehend zylindrische Kavitäten erzeugt. So können Abschnitte der Kavität, welche durch den zweiten oder spätere Sprühätzschritte erzeugt worden sind, mittels der Laserbehandlung auf den Durchmesser des Mittels des ersten Sprühätzschritts erzeugten Abschnitts aufgeweitet werden, so dass das sukzessiv erzeugte Durchgangsloch in dem Nickelrohr eine durchgehend zylindrische Form aufweist. Auch andere Oberflächenunebenheiten auf der inneren Umfangsoberfläche des Durchgangslochs, welche sich aus Unregelmäßigkeiten der Sprühätzbehandlung ergeben können, können mittels der Laserbehandlung entfernt werden.

Die zylindrischen Kavitäten bilden Formhohlräume, mittels welchen das siebförmige Entformungswerkzeug zylindrische Vorformlinge herstellen kann. Mittels der Laserbehandlung kann sichergestellt werden, dass die Vielzahl der auf dem siebförmigen Entformungswerkzeug verteilten Formhohlräume eine im Wesentlichen einheitliche zylindrische Form aufweist.

In einer weiter bevorzugten Weiterbildung werden mittels der Laserbehandlung zum Entfernen der Verengungen durchgehend konische Kavitäten erzeugt. Dabei werden die konischen Kavitäten in Form von Durchgangslöchern derart auf dem Nickelrohr erzeugt, dass sie sich von der äußeren Umfangsoberfläche des Nickelrohrs hin zu der inneren Umfangsoberfläche des Nickelrohrs verjüngen. Die Durchgangslöcher bzw. Formhohlräume erleichtern aufgrund der Konizität das Entformen von mittels den Hohlräumen erzeugten Vorformlingen.

Überdies bietet sich die Erzeugung von konischen Kavitäten an, da das mittels des mehrstufigen Sprühätzens erzeugte Durchgangsloch aufgrund der Abnahme der Durchmesser der sukzessiv erzeugten Abschnitte der Kavität bereits eine sich stufenweise verjüngende Form aufweist. Zur Begradigung der inneren Umfangsoberfläche des Durchgangslochs ist somit ein vergleichsweise geringer Materialabtrag ausreichend, um eine konische Kavität des Durchgangslochs zu erzeugen.

In einer weiter bevorzugten Ausgestaltung werden die Löcher auf dem Schutzlack gleichmäßig verteilt, wobei die Löcher untereinander jeweils den gleichen Durchmesser aufweisen. Die gleichmäßige Verteilung der Löcher auf dem Schutzlack hat zur Folge, dass die mittels der mehrstufigen Sprühätzbehandlung erzeugten Kavitäten gleichmäßig auf dem Nickelrohr verteilt sind. Aufgrund des gleichen Durchmessers der Löcher weisen auch die mittels der mehrstufigen Sprühätzbehandlung erzeugten Durchgangslöcher den gleichen Durchmesser auf.

In einer weiter bevorzugten Ausführungsform werden die Löcher auf dem Schutzlack unregelmäßig verteilt, wobei die Löcher untereinander jeweils den gleichen Durchmesser aufweisen. Die ungleichmäßige Verteilung der Löcher auf dem Schutzlack hat zur Folge, dass die mittels der mehrstufigen Sprühätzbehandlung erzeugten Durchgangslöcher unregelmäßig auf dem Nickelrohr bzw. dem siebförmigen Entformungswerkzeug verteilt sind.

In einer bevorzugten Ausgestaltung weist das Nickelrohr eine Wandstärke von 150 bis 500 µm auf. Die Wandstärke des Nickelrohrs definiert die Länge der Durchgangslöcher und damit die Länge der mittels des siebförmigen Entformungswerkzeugs entformbaren Vorformlinge. Eine einheitliche Wandstärke des Nickelrohrs stellt sicher, dass die Durchgangslöcher und somit die mittels des siebförmigen Entformungswerkzeugs erzeugbaren Vorformlinge eine einheitliche Länge aufweisen. Umso größer die Wandstärke des Nickelrohrs ist, umso mehr Sprühätzschritte sind nötig, um ein Durchgangsloch in dem Nickelrohr zu erzeugen.

In einer bevorzugten Ausführungsform beträgt der Durchmesser der Kavitäten nach der Laserbehandlung 100 bis 500 µm. Dieser Durchmesser kann einheitlich über die gesamte Länge eines Durchgangslochs, einschließlich der Endbereiche des Durchgangslochs, bereitgestellt werden. Somit ist es möglich, mittels des siebförmigen Formungswerkzeugs Vorformlinge von einheitlichem Durchmesser herzustellen. Alternativ können auch Vorformlinge hergestellt werden, bei welchen der Durchmesser aufgrund einer Konizität der Durchgangslöcher abnimmt.

Aufgrund des vorstehend beschriebenen Verfahrens kann der Durchmesser auch in den Endbereichen des Durchgangslochs bereitgestellt werden. Insbesondere kann vermieden werden, dass in den Endbereichen Aufweitungen, beispielsweise in Form von Radien, auftreten.

In einer Weiterbildung werden 50 bis 500 Löcher pro cm² auf dem Schutzlack erzeugt. Entsprechend können mittels der mehrstufigen Sprühätzbehandlung 50 bis 500 Durchgangslöcher pro cm² in dem Nickelrohr erzeugt werden.

In einer weiter bevorzugten Ausführungsform wird das Nickelrohr in der Endwandstärke des siebförmigen Entformungswerkzeugs bereitgestellt. Entsprechend ist ein Materialabtrag oder ein Materialauftrag in Bezug auf die Wandstärke des Nickelrohrs nicht erforderlich. Die Bearbeitung des Nickelrohrs beschränkt sich im Wesentlichen auf die Erzeugung der Durchgangslöcher mittels der mehrstufigen Sprühätzbehandlung sowie der Lasernachbehandlung.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch ein Ablaufdiagramm eines Verfahrens zur Herstellung eines siebförmigen Entformungswerkzeugs,
- Figur 2: schematisch eine Schnittansicht eines Durchgangslochs, und
- Figur 3: schematisch eine Schnittansicht eines Durchgangslochs.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

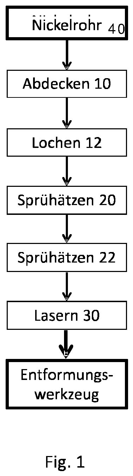

Figur 1 ist ein Ablaufdiagramm eines Verfahrens zur Herstellung eines siebförmigen Entformungswerkzeugs zu entnehmen. Zunächst wird ein Nickelrohr mit einer Wandstärke von 300 µm bereitgestellt. Das Nickelrohr wurde zuvor durch ein galvanisches Verfahren erzeugt. Alternativ kann auch ein Kupferrohr zum Einsatz kommen.

Bei Schritt 10 wird die äußere Umfangsoberfläche des Nickelrohrs mit einem Schutzlack abgedeckt. Unter Schritt 12 werden mittels eines Lasers Löcher in dem Schutzlack erzeugt. In Bezug auf den Schutzlack handelt es sich dabei um Durchgangslöcher, durch welche am Grund der Löcher das Nickelrohr freigelegt wird. Die Löcher sind gleichmäßig auf dem Schutzlack verteilt und weisen einen Durchmesser von 250 µm auf. Die Löcher werden in einer Dichte von 200 Stück pro cm² über den Umfang des Schutzlacks verteilt.

Die Löcher sind kreisförmig, so dass zylinderförmige Durchgangslöcher in dem Schutzlack entstehen. Alternativ können die Löcher auch eckig ausgeführt sein, so dass drei-, vier-, fünf-, sechseckige Löcher und dergleichen erzeugt werden können. Auch sternförmige, ovale, elliptische und andere Geometrien können für die Löcher infrage kommen. Der mit Löchern versehene Schutzlack wird auch als Ätzmaske bezeichnet.

Im nächsten Schritt 20 wird das mit der Ätzmaske versehene Nickelrohr einer Sprühätzbehandlung unterzogen. Als Ätzmittel kann beispielsweise FeCl₃ zum Einsatz kommen. Der Schutzlack, d.h., die Ätzmaske ist resistent gegen das Sprühätzmittel. In Bezug auf das Nickelrohr hingegen kann sich das Ätzmittel in das Material hineinätzen. Die im Bereich der Löcher der Ätzmaske freiliegenden Bereiche des Nickelrohrs geraten mit dem Ätzmittel in Kontakt, wobei sich das Ätzmittel in das Nickelrohr hineinfrisst und Kavitäten in Form von Sacklöchern bildet. Die Kavitäten weisen an ihrem Randbereich im Wesentlichen die Form der Löcher der Ätzmaske auf. Auch der Durchmesser der Kavitäten entspricht im Wesentlichen dem Durchmesser der Löcher in der Ätzmaske. Die Tiefe der mittels unter Schritt 20 durchgeführten Sprühätzbehandlung beträgt in etwa die Hälfte der Wandstärke des Nickelrohrs, d.h. 150 µm.

Im nächsten Schritt 22 wird das Nickelrohr samt Ätzmaske einer weiteren Sprühätzbehandlung unterzogen. Dabei frisst sich das Ätzmittel, ausgehend von dem Boden der in dem vorhergehenden Schritt 20 erzeugten Sacklöchern weiter in Bezug auf das Nickelrohr radial nach innen, bis schließlich aus dem Sackloch ein Durchgangsloch gebildet wird.

Mittels der zweiten Sprühätzbehandlung unter Schritt 22 ist es nicht möglich, die Erweiterung der Kavität nahtlos an das mittels der ersten Sprühätzbehandlung erzeugte Sackloch anzuschließen. Somit kommt es zu einer Verengung der Kavität im Bereich des Übergangs des Abschnitts der Kavität, welcher mittels der ersten Sprühätzbehandlung erzeugt worden ist, zu dem Abschnitt der Kavität, welcher mittels der zweiten Sprühätzbehandlung erzeugt worden ist. D.h., der Abschnitt der Kavität, welcher mittels der zweiten Sprühätzbehandlung erzeugt worden ist, weist einen geringeren Durchmesser auf als der Abschnitt der Kavität, welcher mittels der ersten Sprühätzbehandlung erzeugt worden ist.

Die vorstehend beschriebene Verengung wird in Schritt 30 mittels einer Lasernachbehandlung entfernt. Dabei kommt ein Gravurlaser zum Einsatz, welcher den Abschnitt der Kavität, welcher mittels der zweiten Sprühätzbehandlung erzeugt worden ist, so weit aufweitet, bis dieser den gleichen Durchmesser wie der Abschnitt der Kavität, welcher mit der ersten Sprühätzbehandlung erzeugt worden ist, aufweist. Durch die Lasernachbehandlung entsteht ein Durchgangsloch, wobei das Durchgangsloch die Form einer durchgehend zylindrischen Kavität aufweist.

Alternativ können mittels der Lasernachbehandlung auch ein Durchgangsloch mit einer durchgehend konischen Kavität erzeugt werden. Dabei verjüngt sich das Durchgangsloch von der äußeren Umfangsoberfläche des Nickelrohrs hin zu der inneren Umfangsoberfläche des Nickelrohrs.

Schließlich wird die Ätzmaske entfernt, wodurch ein fertiges siebförmiges Entformungswerkzeug erhalten wird. Alternativ kann die Ätzmaske bereits nach der Sprühätzbehandlung, mittels welcher das Durchgangsloch erzeugt worden ist, entfernt werden.

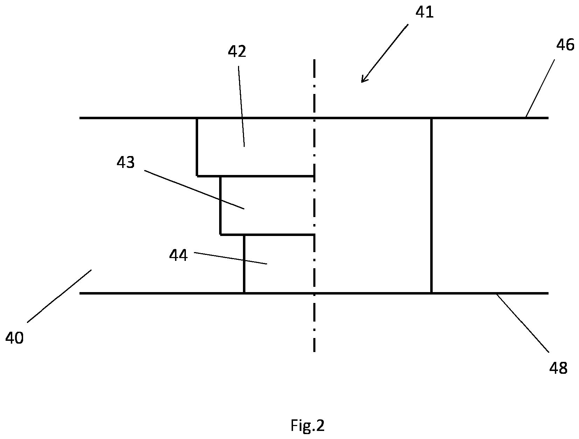

Figur 2 zeigt eine Schnittansicht eines Durchgangslochs 41 in einem Nickelrohr 40, wobei der linken Hälfte der Figur 2 der Zustand vor der Lasernachbehandlung und der rechten Seite der Figur 2 der Zustand nach der Lasernachbehandlung zu entnehmen ist. Das in Figur 2 gezeigte Durchgangsloch 41 wurde mittels drei Sprühätzbehandlungen erzeugt. Entsprechend weist das auf der linken Seite der Figur 2 gezeigte Durchgangsloch 41 drei Bereiche mit unterschiedlichen Durchmessern auf. Das Durchgangsloch 41 kann in die Abschnitte 42, 43 und 44 unterteilt werden. Dabei ist der Abschnitt 42 der Abschnitt der Kavität, welcher mittels der ersten Sprühätzbehandlung erzeugt worden ist, der Abschnitt 43 der Abschnitt, welcher mittels der zweiten Sprühätzbehandlung erzeugt worden ist, und der Abschnitt 44 der Abschnitt, welcher mittels der dritten Sprühätzbehandlung erzeugt worden ist.

Von einer äußeren Umfangsoberfläche 46 des Nickelrohrs 40 hin zu einer inneren Umfangsoberfläche 48 des Nickelrohrs 40 betrachtet, wirken die gegenüber dem ersten Abschnitt 42 verringerten Durchmesser der Abschnitte 43 und 44 wie Verengungen. Diese Verengungen werden mittels eines Gravurlasers entfernt, d.h., die Abschnitte 43 und 44 werden aufgeweitet, so dass sie den gleichen Durchmesser wie der Abschnitt 42 aufweisen, wie der rechten Seite der Figur 2 zu entnehmen ist. Die rechte Seite der Figur 2 zeigt ein durchgehend zylindrisches Durchgangsloch nach der Lasernachbehandlung.

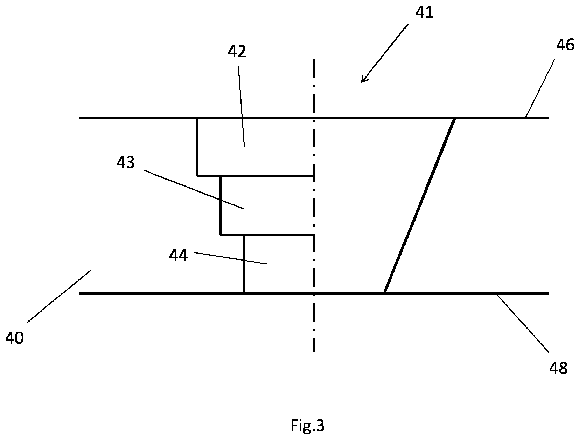

Figur 3 zeigt schematisch ein Durchgangsloch 41 in einem Nickelrohr 40, wobei die linke Seite der Figur 3 das Durchgangsloch 41 vor der Lasernachbehandlung und die rechte Seite der Figur 3 das Durchgangsloch 41 nach der Lasernachbehandlung zeigt. Das in Figur 3 gezeigte Durchgangsloch 41 unterscheidet sich von dem in Figur 2 gezeigten Durchgangsloch dadurch, dass es eine durchgehend konische Kavität aufweist. Die konische Form des Durchgangslochs 41 wird durch die unterschiedlichen Durchmesser der Abschnitte 42, 43 und 44 begünstigt. Im Gegensatz zu dem in Figur 2 gezeigten zylindrischen Durchgangsloch muss zur Herstellung des in Figur 3 gezeigten konischen Durchgangslochs auch der Randbereich des ersten Abschnitts 42 mittels des Lasers nachbehandelt werden.

Das in Figur 3 gezeigte konische Durchgangsloch verjüngt sich ausgehend von der äußeren Umfangsoberfläche 46 des Nickelrohrs 40 hin zu der inneren Umfangsoberfläche 48 des Nickelrohrs 40, wie der rechten Seite der Figur 3 zu entnehmen ist.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 10: Abdecken
- 12: Lochen

- 20: Sprühätzen
- 22: Sprühätzen

- 30: Lasern

- 40: Nickelrohr
- 41: Durchgangsloch
- 42: Abschnitt
- 43: Abschnitt
- 44: Abschnitt
- 46: Äußere Umfangsoberfläche
- 48: Innere Umfangsoberfläche

## Patentansprüche

1. Verfahren zur Herstellung eines siebförmigen Entformungswerkzeugs, die Schritte umfassend:
- Bereitstellen eines Nickelrohrs (40),
- Abdecken (10) der Oberfläche des Nickelrohrs mit einem Schutzlack,
- Erzeugen einer Vielzahl von Löchern (12) in dem Schutzlack, zur Bildung einer Ätzmaske auf dem Nickelrohr (40),
- Sprühätzen (20) des Nickelrohrs (40) samt Ätzmaske, zur Erzeugung einer Vielzahl von Kavitäten in dem Nickelrohr (40) an den Stellen, an welchen sich die Löcher in der Ätzmaske befinden,
**dadurch gekennzeichnet, dass**
dem Sprühätzschritt (20) mindestens ein zweiter Sprühätzschritt (22) folgt, um Kavitäten in Form von Durchgangslöchern (41) zu erzeugen, und die inneren Oberflächen der Kavitäten in einem weiteren Schritt mittels eines Lasers behandelt werden (30), um aufgrund der aufeinanderfolgenden Sprühätzschritte (20, 22) in den Kavitäten entstandene Verengungen zu entfernen.

2. Verfahren nach Anspruch 1, **dadurch gekennzeichnet, dass** mittels mindestens dem ersten Sprühätzschritt (20) eine Kavität in Form eines Sacklochs erzeugt wird und mittels des letzten Sprühätzschritts (22) die Kavität die Form eines Durchgangslochs (41) erhält.

3. Verfahren nach Anspruch 1 oder 2, **dadurch gekennzeichnet, dass** sich die Kavität des Durchgangslochs (41) stufenweise verengt, wobei der Durchmesser des mittels des zweiten Sprühätzschritts (22) erzeugbaren Abschnitts (43) der Kavität gegenüber dem vorhergehenden Abschnitt (42) kleiner ist.

4. Verfahren nach einem der vorhergehenden Ansprüche, **dadurch gekennzeichnet, dass** die Laserbehandlung (30) zum Entfernen der Verengungen mittels eines Gravurlasers erfolgt.

5. Verfahren nach einem der vorhergehenden Ansprüche, **dadurch gekennzeichnet, dass** mittels der Laserbehandlung (30) zum Entfernen der Verengungen durchgehend zylindrische Kavitäten erzeugt werden.

6. Verfahren nach einem der Ansprüche1 bis 4, **dadurch gekennzeichnet, dass** mittels der Laserbehandlung (30) zum Entfernen der Verengungen durchgehend konische Kavitäten erzeugt werden.

7. Verfahren nach einem der vorhergehenden Ansprüche, **dadurch gekennzeichnet, dass** die Löcher auf dem Schutzlack gleichmäßig verteilt werden, wobei die Löcher untereinander jeweils den gleichen Durchmesser aufweisen.

8. Verfahren nach einem der Ansprüche 1-6, **dadurch gekennzeichnet, dass** die Löcher auf dem Schutzlack unregelmäßig verteilt werden, wobei die Löcher untereinander jeweils den gleichen Durchmesser aufweisen.

9. Verfahren nach einem der vorhergehenden Ansprüche, **dadurch gekennzeichnet, dass** das Nickelrohr (40) eine Wandstärke von 150 bis 500 µm aufweist.

10. Verfahren nach einem der vorhergehenden Ansprüche, **dadurch gekennzeichnet, dass** der Durchmesser der Kavitäten nach der Laserbehandlung (30) 100 bis 500 µm beträgt.

11. Verfahren nach einem der vorhergehenden Ansprüche, **dadurch gekennzeichnet, dass** 50 bis 500 Löcher pro cm² auf dem Schutzlack erzeugt werden.

12. Verfahren nach einem der vorhergehenden Ansprüche, **dadurch gekennzeichnet, dass** das Nickelrohr (40) in der Endwandstärke des siebförmigen Entformungswerkzeugs bereitgestellt wird.

## Claims

1. Method for producing a sieve-like demoulding tool, comprising the steps:
- providing a nickel tube (40),
- covering (10) the surface of the nickel tube with a protective lacquer,
- creating a plurality of holes (12) in the protective lacquer for forming an etch mask on the nickel tube (40),
- spray etching (20) the nickel tube (40) together with the etch mask, for creating a plurality of cavities in the nickel tube (40) at the places at which the holes are located in the etch mask,
**characterised in that**
- the spray etching step (20) is followed by at least one second spray etching step (22) in order to create cavities in the form of through holes (41), and the inner surfaces of the cavities are treated (30) in a further step by means of a laser for removing constrictions formed in the cavities as a result of the successive spray etching steps (20, 22).

2. Method according to claim 1, **characterised in that** by means of at least the first spray etching step (20) a cavity is created in the form of a blind hole and by means of the last spray etching step (22) the cavity gains the form of a through hole (41).

3. Method according to claim 1 or 2, **characterised in that** the cavity of the through hole (41) narrows in a step-wise manner, wherein the diameter of the portion (43) of the cavity which can be created by means of the second spray etching step (22) is smaller than the previous portion (42).

4. Method according to any of the preceding claims, **characterised in that** the laser treatment (30) for removing the constrictions is carried out by means of an engraving laser.

5. Method according to any of the preceding claims, **characterised in that** by means of the laser treatment (30) for removing the constrictions, continuous cylindrical cavities are created.

6. Method according to any of claims 1 to 4, **characterised in that** by means of the laser treatment (30) for removing the constrictions, through-going conical cavities are created.

7. Method according to any of the preceding claims, **characterised in that** the holes on the protective lacquer are evenly distributed, wherein the holes have in each case the same diameter among each other.

8. Method according to any of claims 1-6, **characterised in that** the holes are unevenly distributed on the protective layer, wherein each of the holes have the same diameter among each other.

9. Method according to any of the preceding claims, **characterised in that** the nickel tube (40) has a wall thickness of 150 to 500 µm.

10. Method according to any of the preceding claims, **characterised in that** the diameter of the cavities after the laser treatment (30) is 100 to 500 µm.

11. Method according to any of the preceding claims, **characterised in that** 50 to 500 holes per cm² are created on the protective lacquer.

12. Method according to any of the preceding claims, **characterised in that** the nickel tube (40) is provided in the end wall thickness of the sieve-like demoulding tool.

## Revendications

1. Procédé de fabrication d'un outil de démoulage en forme de tamis, comprenant les étapes consistant à :
- prévoir un tube en nickel (40),
- recouvrir (10) la surface du tube en nickel d'un vernis de protection,
- produire une pluralité de trous (12) dans le vernis de protection pour former un masque de gravure sur le tube en nickel (40),
- graver par pulvérisation (20) le tube en nickel (40) conjointement avec le masque de gravure pour produire une pluralité de cavités dans le tube de nickel (40) aux emplacements où se trouvent les trous dans le masque de gravure,
**caractérisé en ce que**
l'étape de gravure par pulvérisation (20) est suivie d'au moins une seconde étape de gravure par pulvérisation (22) pour produire des cavités sous forme de trous traversants (41), et les surfaces intérieures des cavités sont traitées (30) dans une étape supplémentaire au moyen d'un laser pour éliminer les rétrécissements formés dans les cavités à la suite des étapes successives de gravure par pulvérisation (20, 22).

2. Procédé selon la revendication 1, **caractérisé en ce qu'**au moyen d'au moins la première étape de gravure par pulvérisation (20), une cavité est produite sous forme d'un trou borgne et au moyen de la dernière étape de gravure par pulvérisation (22), la cavité prend la forme d'un trou traversant (41).

3. Procédé selon la revendication 1 ou 2, **caractérisé en ce que** la cavité du trou traversant (41) se rétrécit par paliers, dans lequel le diamètre de la section (43) de la cavité pouvant être produite au moyen de la seconde étape de gravure par pulvérisation (22) est plus petit que la section précédente (42).

4. Procédé selon l'une quelconque des revendications précédentes, **caractérisé en ce que** le traitement au laser (30) pour éliminer les rétrécissements s'effectue au moyen d'un laser de gravure.

5. Procédé selon l'une quelconque des revendications précédentes, **caractérisé en ce que** des cavités cylindriques continues sont produites au moyen du traitement au laser (30) pour éliminer les rétrécissements.

6. Procédé selon l'une quelconque des revendications 1 à 4, **caractérisé en ce que** des cavités coniques continues sont produites au moyen du traitement au laser (30) pour éliminer les rétrécissements.

7. Procédé selon l'une quelconque des revendications précédentes, **caractérisé en ce que** les trous sont répartis uniformément sur le vernis de protection, dans lequel les trous présentent chacun le même diamètre entre eux.

8. Procédé selon l'une quelconque des revendications 1-6, **caractérisé en ce que** les trous sont répartis irrégulièrement sur le vernis de protection, dans lequel les trous présentent chacun le même diamètre entre eux.

9. Procédé selon l'une quelconque des revendications précédentes, **caractérisé en ce que** le tube en nickel (40) présente une épaisseur de paroi de 150 à 500 µm.

10. Procédé selon l'une quelconque des revendications précédentes, **caractérisé en ce que** le diamètre des cavités après le traitement au laser (30) est de 100 à 500 µm.

11. Procédé selon l'une quelconque des revendications précédentes, **caractérisé en ce que** 50 à 500 trous par cm² sont créés sur le vernis de protection.

12. Procédé selon l'une quelconque des revendications précédentes, **caractérisé en ce que** le tube en nickel (40) est prévu dans l'épaisseur de paroi d'extrémité de l'outil de démoulage en forme de tamis.
